# EUROPEAN PATENT SPECIFICATION

(11) **EP 4 389 641 B1**
(45) Date of publication and mention of the grant of the patent: **09.09.2026**
(21) Application number: 22215758.8
(22) Date of filing: 22.12.2022
(51) Int. Cl.: B65G 1/04

(54) **AN AUTOMATED WAREHOUSE SHUTTLE FOR CARRYING ROLLABLE GOODS**
AUTOMATISIERTES LAGERFAHRZEUG ZUM TRANSPORT VON ROLLBAREN WAREN
NAVETTE D'ENTREPÔT AUTOMATISÉE POUR TRANSPORTER DES MARCHANDISES POUVANT ÊTRE ENROULÉES

(43) Date of publication of application: 26.06.2024
(73) Proprietor: MOVU, 9160 Lokeren (BE)
(72) Inventor: Vandemergel, Luc, 8020 Oostkamp (BE)
(74) Representative: Ipsilon Belgium

(56) References cited:
- EP-A1- 1 329 397
- DE-A1- 102013 226 022
- DE-U1- 20 210 657
- DE-U1- 8 905 526

## Description

### Field of the Invention

The present invention generally relates to an automated warehouse shuttle for carrying rollable goods.

### Background of the Invention

Automated warehouses and automated warehouse shuttle systems are generally known. Warehouses include relatively large storage structures, generally structured along a plurality of substantially parallel lanes. The storage structures are arranged to provide storage locations to goods, often palletized goods. Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse aisles may or may not be provided with tracks. Additionally, lift systems may allow connections between various levels of the storage structure. Storage lanes usually do not include a solid floor, whereas transverse aisles or transit lanes may be provided with a solid floor, for example provided with a grating, at predetermined levels. The automated warehouse shuttle system further includes warehouse shuttles, in particular mobile robots, which are configured to automatically move along said tracks, and which are configured to transport goods and/or goods carriers, such as pallets, to and from said storage locations in the storage structure. An automated shuttle system can comprise a plurality of automated shuttles which are often integrated into, and controlled by, a central warehouse management control system.

Goods in warehouses are generally stored and transported on pallets. The warehouse shuttles are configured to move under the pallets, lift them up and move the pallets to a predetermined location in the warehouse. However, not all goods are stored or transported on pallets. Rollable goods, such as barrels, tons, (oil) drums, rolled carpets, rolls of paper, rolls of steel or other goods, often have a substantially cylindrical shape and can roll along at least one direction, which is often transverse to a longitudinal direction of the goods. In other words, the axis of rotation of the goods is substantially in parallel to a longitudinal axis of the goods. In some cases, such as in barrels or tons, the rollable goods can comprise a second curvature along said longitudinal axis; resulting in a barrel-shape rather than a substantially cylindrical shape. Other rollable goods may have a substantially spherical shape and can roll along a plurality of directions. Rollable goods may be stored in dedicated storage locations of the warehouse storage structure, which are configured to keep said rollable goods in place. When such rollable goods are moved by a shuttle, in particular moved along a storage line, the direction of rolling of the goods is generally in parallel to the direction of moving of the shuttles and the goods could easily fall off from the shuttle. To stabilize rollable goods on a warehouse shuttle, preformed stuts could be used on the warehouse shuttle matching a shape of the rollable good. However, this is disadvantageous in terms of required loading space since the shuttle would then need quite a lot of space to get under the rollable goods to be loaded, which results in a loss in storage space or requires a considerable redesign of the warehouse structure.

The document DE 89 05 526 U1 discloses a warehouse system for storing rollable goods in a horizontal position, in particular paper rolls. The system includes a shuttle movable on rails and provided with a recess in which a paper roll transport vehicle is nested on rails. Said paper roll transport vehicle includes a support plate having a partly crescent shaped surface which can be raised and lowered.

It is therefore an aim of the present invention to solve or at least partly alleviate the above-mentioned problems. In particular, the present invention aims at providing an automated warehouse shuttle for carrying rollable goods along at least one direction in an automated warehouse which can allow safe transport of rollable goods on a shuttle in an automated warehouse while minimizing space needed at loading and unloading said rollable goods on and/or off the shuttle.

### Summary of the Invention

Thereto, there is provided an automated warehouse shuttle for automatically carrying rollable goods on a track along at least one direction in a warehouse. Rollable goods can for example include barrels or tons or other types of rollable goods. The track can for example be physical tracks including at least one rail, preferably two rails substantially in parallel to each other, on which rails an automated warehouse shuttle can be driven. Alternatively, the track may include a plurality of beacons, for example magnetic strips or radar beacons, or other types of beacons known to the person skilled in the art, configured to guide an automated vehicle or shuttle along a predetermined route, such as is known for AGV's. Alternatively, the track is a route in a warehouse along which AMR's can navigate, for example through laser-based navigation. The track along at least a first direction is preferably a track along a storage lane of an automated warehouse, where goods can be stored, picked up and put down. The shuttle includes a support surface configured to support said rollable goods. Said support surface may for example be a support bar, or a plurality of support bars, or more preferably a set of two support bars, or any other suitable support surface. The support surface is movable between a low position in which the shuttle is configured to move under the rollable goods, and a high position in which the support surface is configured to support the rollable goods. The shuttle further comprises a clamping system including at least one pair of clamps. One pair of clamps is to be understood as a set of two cooperating clamps, the clamps being configured to be located on opposing sides facing each other such that the rollable goods are clamped between the two clamps of one pair of clamps. The at least one pair of clamps is movable between a resting position and a clamping position. In an inventive way, the support surface and the clamping system are configured such that moving the support surface from the low position to the high position under the rollable goods causes the clamping system to move from the resting position to the clamping position. In other words, the loading of rollable goods on the support surface causes the clamping system, in particular the at least one pair of clamps, to move from the resting position to the clamping position. In particular, by moving the support surface from the low position to the high position under the rollable goods, a weight of the rollable goods exerts a downward force on the clamping system. This downward force causes the at least one pair of clamps to move to the clamping position. Thanks to the interaction between the moving of the support surface and the activation of the clamping system, rollable goods can be loaded in a relatively compact manner and can be safely moved on a track in at least one direction in an automated warehouse.

The at least one pair of clamps can advantageously be tiltably attached to the support surface such that the at least one pair of clamps is tiltable between a resting position and a clamping position. The tilting of the at least one pair of clamps can allow that a total height of the shuttle including the at least one pair of clamps is lower in a resting position of the at least one pair of clamps than it is in a clamping position. In this way, the shuttle can move under rollable goods without further adaptations to the storage locations in the automated warehouse or without losing storage space. In particular, the tilting movement of the clamps of the at least one pair of clamps is done in a plane which is substantially vertical and substantially in parallel to a direction of movement of the automated warehouse shuttle such that the rollable goods can be clamped in the direction of movement to prevent that the rollable goods can roll off the shuttle. So, the at least one pair of clamps extend in a direction substantially in parallel with the track, which defines a direction of movement of the shuttle.

The at least one pair of clamps can preferably be biased towards the resting position. Bias can for example be provided by a pretensioned element, such as a leaf spring, a coil spring or other types of pretensioned elements known to the person skilled in the art. By biasing the at least one pair of clamps to the resting position, the at least one pair of clamps can automatically return to said resting position when the rollable goods are unloaded from the shuttle. In this way, the shuttle can swiftly continue its way and pick up further rollable goods without a loss of time for repositioning the at least one pair of clamps into the resting position such that the shuttle can drive under further rollable goods. Alternatively, the at least one pair of clamps could be repositioned through a piston system.

Each clamp of the at least one pair of clamps includes a clamping arm configured to clamp the rollable goods in the clamping position and a support arm which is configured to support said rollable goods in the clamping position, the clamping arm and the support arm being fixedly attached to each other forming an obtuse angle. The at least one pair of clamps is mounted on the support surface of the automated warehouse shuttle such that the respective support arms of the clamps of the at least one pair of clamps extend towards each other while the respective clamping arms of the clamps of the at least one pair of clamps extend away from each. The obtuse angle allows a clamping of the rollable goods in the clamping position, while still allowing to save space in the resting position. The angle may be chosen depending on a size and/or a curvature of an exterior surface of the rollable goods to be clamped. The obtuse angle may be a fixed angle or may be an adjustable angle.

Each clamp of the at least one pair of clamps is tiltably attached to the support surface at the obtuse angle formed by the clamping arm and the support arm. A tiltable attachment provides a relatively easy actuation or switch from the resting position of the at least one pair of clamps to the clamping position. The at least one pair of clamps is preferably tiltable in a plane which is substantially in parallel with a direction of moving of the automated warehouse shuttle such that the at least one pair of clamps can prevent the rollable goods to roll off from the automated warehouse shuttle when the at least one pair of clamps is in the clamping position.

Advantageously, the at least one pair of clamps can substantially form a W-shape in the resting position of said at least one pair of clamps. In particular, a free end of the clamping arm of a clamp, free designating an end opposite the ends forming the obtuse angle of the clamp, and a free end of the support arm of said clamp can extend to a same height above the support surface of the shuttle when the clamp is in the resting position. In other words, a single clamp can form a wide V-shape such that two clamps of one pair of clamps can substantially form a W-shape. Such a position can minimize height of the at least one pair of clamps. Tilting the clamps further into an L-position or a mirrored L-position would result in a higher height than a W-position for the at least one pair of clamps.

The support arm of the clamp of the at least one pair of clamps can advantageously be shorter than the clamping arm of said clamp. Since the support arm is configured to support the rollable goods in the clamping position, a weight of the rollable goods can exert a downward force on said support arm, which causes the clamping arm to clamp said rollable goods. The shorter is said support arm, the higher is the ratio of a length of the clamping arm to a length of the support arm, resulting in a lighter actuation of the tilting by a weight of the rollable good.

The automated warehouse shuttle may additionally be configured to move on a track along a second direction which is substantially transverse to a track along the at least one direction. In other words, the automated warehouse shuttle may be configured to drive along two substantially transverse directions while the shuttle remains oriented in the same direction. In other words, the shuttle does not turn into a second direction. Thereto, the shuttle may be provided with two sets of wheels, of which a first set of wheels is configured to move the shuttle along a first track extending in a first direction and of which a second set of wheels is configured to move the shuttle along a second track in a second direction transverse to the first direction. The two set of wheels may for example be movable in height such that the set of wheels needed for driving may be lowered while the other set of wheels, which is not functional, may be risen. Other types of exchanging the set of wheels are feasible as well.

In case the shuttle is configured to move along tracks extending in two substantially transverse directions, the automated warehouse shuttle may further comprise an additional clamping system configured to clamp the rollable goods when the shuttle moves on a track along the second direction substantially transverse to the first direction. Said second clamping system may be configured to clamp the goods in a direction of moving along the second direction. Said second clamping system may be similar to the first clamping system or may function in a different way. The second clamping system may be a system known to the person skilled in the art, since the problem of height when picking up or putting down the goods is only present in storage lanes, not in main lanes which are transverse to said storage lanes. Said second clamping system may clamp the rollable goods simultaneously with the first clamping system or consecutively to or instead of the first clamping system.

### Brief Description of the Drawings

Fig. 1 illustrates a perspective view of a part of an automated warehouse system including three automated warehouse shuttles;
Fig. 2 shows a schematic front view on an automated warehouse shuttle including a support surface in a low position according to a preferred embodiment of the invention;
Fig. 3 shows a schematic side view on the automated warehouse shuttle of Figure 2;
Fig. 4 shows a detail of the schematic side view of Figure 3;
Fig. 5 shows a schematic front view on the automated warehouse shuttle of Fig. 2 including a support surface in a high position;
Fig. 6 shows a schematic side view on the automated warehouse shuttle of Figure 5; and
Fig. 7 shows a detail of the schematic side view of Figure 6.

### Detailed Description of Embodiment(s)

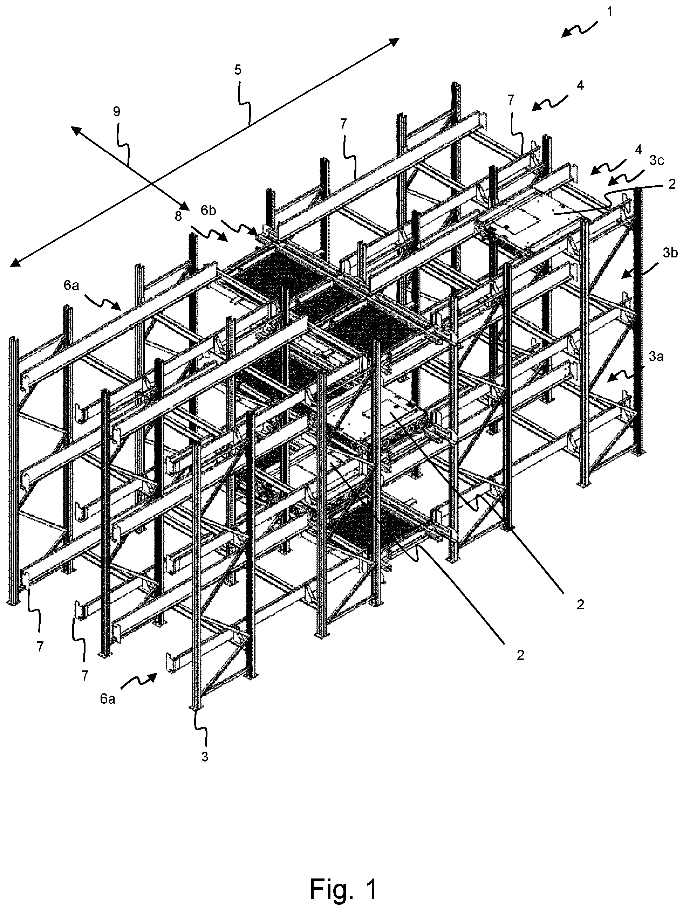

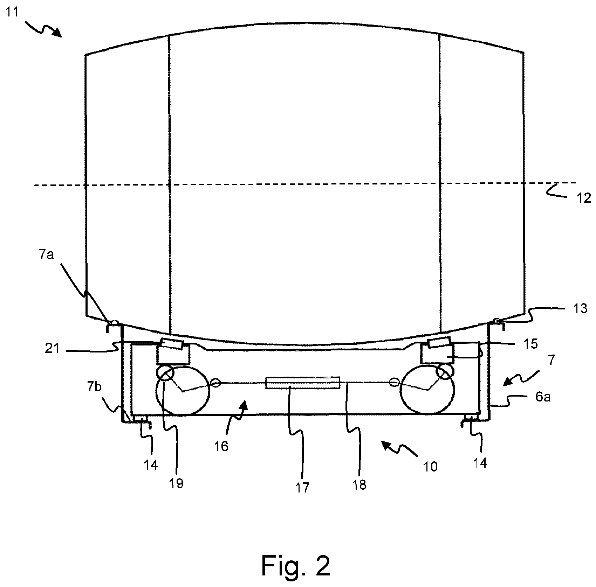

Figure 1 illustrates a perspective view of part of an automated warehouse system 1 including three automated warehouse shuttles 2. The warehouse system 1 generally includes a relatively large storage structure 3 configured to received goods for storage. Said goods may for example be palletized goods, but may also be rollable goods, such as for example barrels. The storage structure 3 can extend over a plurality of levels, of which for example three levels 3a, 3b, 3c are shown in Figure 1. The storage structure 3 generally extends along at least one storage lane 4 in a first direction 5, and preferably a plurality of storage lanes, which are substantially in parallel to each other. Transverse aisles, generally called transit lanes or main lanes 8, may connect said substantially parallel storage lanes 4, which transverse aisles may also be provided with tracks extending in a second direction 9 substantially transverse to the first direction 5. Storage lanes 4 usually do not include a solid floor, whereas transit lanes 8 may be provided with a solid floor, for example gratings, at predetermined levels. A first track 6a including at least one rail 7, preferably a pair of rails at a distance of each other, extend in said storage lane 4, preferably on every level 3a, 3b, 3c of each storage lane 4. Said rails 7 can preferably include two substantially horizontal surfaces: an upper surface 7a configured to support stored goods and a lower surface 7b (see Fig. 2) configured to receive wheels of an automated warehouse shuttle 2. Said rails may thereto have a specific shape, for example a stepped shape including a lower flange extending inwardly towards the other rail of a pair of rails, and an upper flange extending outwardly, so extending away from the other rail of a pair of rails. The upper flange may then be configured to receive goods for storage while the lower flange may guide the automated warehouse shuttles 2. Other shapes including an upper surface and a lower surface may be used as well. A second track 6b extend in a main lane or transit lane 8. Said second track 6b may have a similar shape as the first track 6a, or more preferably, may have a different shape, since no goods are stored in said main lane 8. Automated warehouse shuttles 2 may be configured to drive along tracks 6a and 6b of storage lanes 4 and of main lanes 8 respectively of a same level without the shuttles being oriented differently. In other words, shuttles do not turn into another direction. Instead, the shuttles may preferably include two sets of wheels which are lowered and/or risen according to the lane in which they are driving. Alternatively, automated warehouse shuttles 2 may be configured to drive along a single direction only.

Even if the above-described automated warehouse system is a preferred embodiment, other types of warehouses and warehouse shuttle systems may also be considered within the framework of the present invention. As an example, the automated warehouse shuttle may be an Automated Guided Vehicle (AGV) configured to be guided along tracks including for example magnetic strips or beacons or the automated warehouse shuttle may be an Autonomous Mobile Robot (AMR) configured to use laser navigation along a track. So, the tracks in the warehouse do not necessarily include physical rails configured to guide the warehouse shuttle.

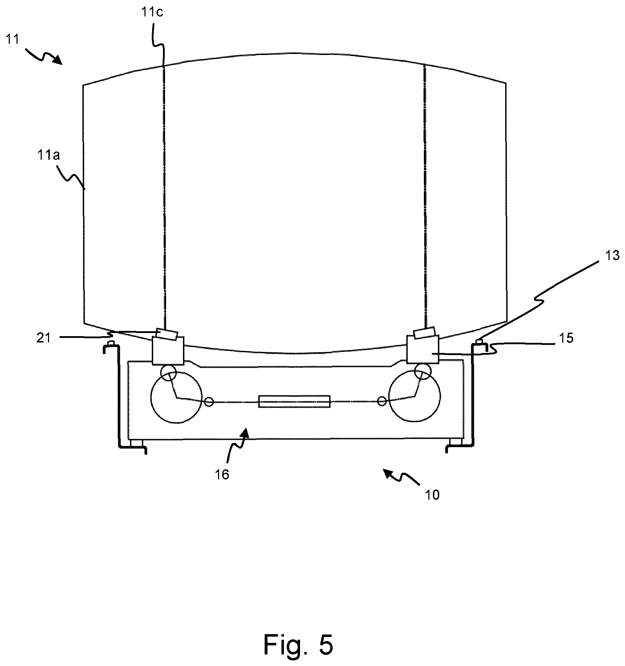

Figure 2 shows a schematic front view on an automated warehouse shuttle including a support surface in a low position according to a preferred embodiment of the invention. The automated warehouse shuttle 10 is configured for automatically carrying rollable goods, such as for example a barrel 11, on a track 7 along at least one direction in a warehouse, in particular along the first direction 5 of a storage lane 4. The track 7 can for example include two substantially parallel rails 6a extending along said first direction 5 in the storage lane 4. Said rails 6a preferably include two substantially horizontal surfaces: an upper surface 7a configured to support said stored goods, such as barrel 11, and a lower surface 7b configured to receive wheels 12 of the automated warehouse shuttle 10. Said rails may thereto have a specific shape, for example a stepped shape. A rollable good is a good which is rollable in at least one direction by rotating said rollable good around at least one rotation axis 12 which is substantially transverse to the direction of rolling. Thereto, a rollable good includes at least one curved surface having a curvature in at least one direction. In case of a barrel 11, the curved surface has a curvature in two substantially transverse directions. As a result, a barrel cannot stably rest on a flat surface without further support. To prevent the rollable goods, for example the barrels 11, from rolling along the track 7 when stored, a rail 7 may include pairs of blocking elements 13 which may be mountable on said upper surface 7a of the rail 7 such that the rollable goods are blocked in between the blocking elements 13 of said pair of blocking elements. Preferably, two pairs of blocking elements 13 are used for blocking a single barrel 11, in particular one pair of blocking elements 13 per rail 7. The automated warehouse shuttle 10 includes a set of at least four wheels 14 configured to engage said track 7 such that the shuttle 10 can move along said first direction 5. The shuttle 10 can further comprise a recessed central platform such that a total height of the shuttle is low enough to allow the shuttle 10 to pass under rollable goods stored in a storage lane 4. The shuttle 10 further includes a support surface 15, in particular a set of two support bars 15, configured to support said rollable goods. The support bars 15 may for example be mounted substantially in parallel to each other. The support bars 15 may be mounted at a distance of each other along opposite sides of the shuttle 10 as seen in said first direction 4 along which the storage lane 4 extends. The support surface 15, in particular said set of support bars, is movable between a low position in which the shuttle is configured to move under the rollable goods, as shown in Figure 2, and a high position in which the support surface 15 is configured to support the rollable goods, as shown in Figure 5. Said support surface may also be embodied as a single support surface, or a plurality of support surfaces, which may function independently from each other, or which may be functionally and/or physically connected. To move the support surface 15 between a low position and a high position, the shuttle may include any suitable actuation system 16 known to the person skilled in the art. As an example, the actuation system 16 may include a spindle 17 configured to increase or decrease a length of a shaft 18 connecting a rotatable eccentric 19 on a respective edge of said shaft 18. Increasing or decreasing a length of said shaft 18 can cause said eccentric 19 to rotate, the eccentric 19 thereby moving the respective support bars 15 into a high or low position. The shuttle 10 further comprises a clamping system 20 including at least one pair of clamps 21. Said at least one pair of clamps 21 may preferably extend in the first direction 5 along which the storage lane 4 extends. The at least one pair of clamps 21 may for example be mounted on said support bar 15. The at least one pair of clamps 21 is movable between a resting position and a clamping position. The support surface 15 and the clamping system 20 are configured such that moving the support surface 15 from the low position to the high position under the rollable goods causes the clamping system 20 to move from the resting position to the clamping position, as will be explained in more detail further on.

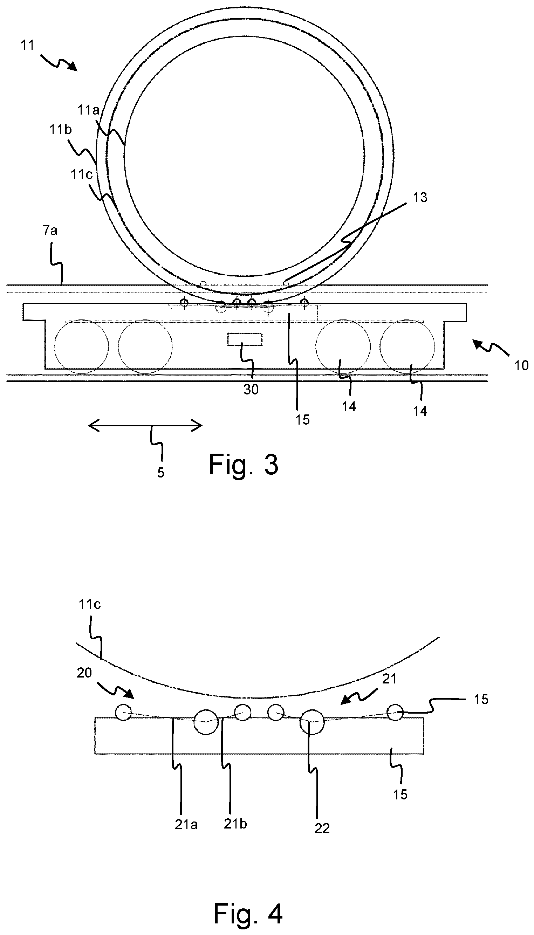

Figure 3 shows a schematic side view on the automated warehouse shuttle of Figure 2. The barrel 11 includes a smallest circumference 11a, which is its circumference at a top or bottom of the barrel. Due to its curved surface, the barrel reaches a largest circumference 11b more or less halfway between the top and the bottom of the barrel 11. The barrel 11 is further supported in between two support elements 13 on an upper surface 7a of the rail 6a of the track 7 in the storage lane 4 along an intermediate circumference 11c of the barrel 11. To find an optimal loading location for the shuttle 10 to load the barrel 11 on the shuttle, at least one of the rails 6a of the track 7 may include an opening 30 positioned substantially halfway in between a pair of blocking elements 13. The shuttle 10, in particular a side of said shuttle 10 as seen in the first direction 5, may further include a sensor configured to detect said opening 30 in the rail 6a. In this way, the shuttle can be positioned automatically at a barrel loading or unloading location in the storage lane 4.

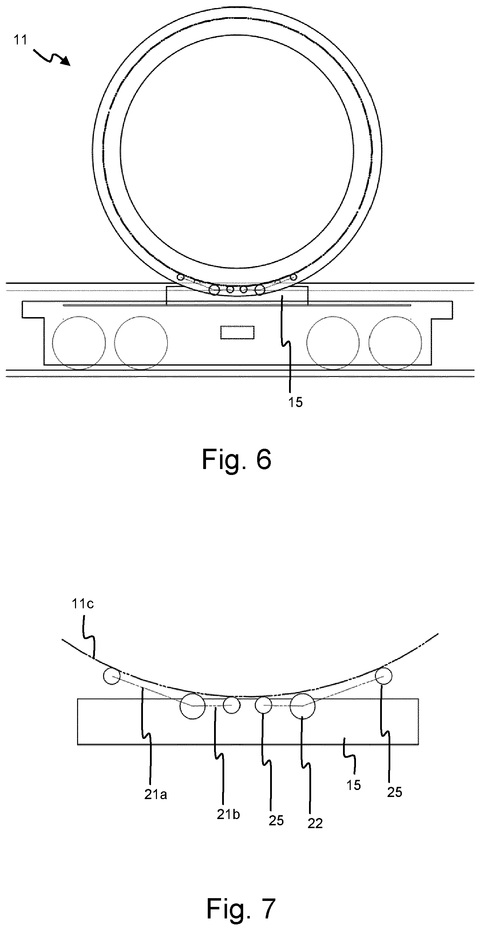

Figure 4 shows a detail of the schematic side view of Figure 3, in particular a side view of one of the support bars 15 on which a pair of clamps 21 is mounted, the clamping system 20 being in the resting position. The at least one pair of clamps 21 is preferably biased towards said resting position. The two clamps 21 of the pair of clamps are preferably mounted substantially in line with each other in the first direction 4, substantially mirroring each other. Each clamp 21 preferably includes a clamping arm 21a and a support arm 21b, the clamping arm 21a and the support arm 21b forming an obtuse angle at a joint 22. The respective support arms 21b of the pair of clamps 21 are preferably directed towards each other. As a result, the at least one pair of clamps substantially forms a W-shape in the resting position. Each clamp 21 of the at least one pair of clamps is preferably tiltably attached to the support surface 15, in particular at said joint 22 of the obtuse angle between the clamping arm 21a and the support arm 21b, such that the at least one pair of clamps is tiltable between a resting position, shown in Figure 4, and a clamping position, shown in Figure 7. The W-shape in the resting position allows the shuttle 10 to pass under rollable goods stored in said storage lane 4.

Figure 5 shows a schematic front view on the automated warehouse shuttle of Fig. 2 including a support surface in a high position. As explained with respect to Figure 2, the actuation system 16 may bring the support surface, in particular the two support bars 15 to a high position, as shown in Figure 5. In said high position, the support surface supports the rollable goods, for example barrel 11. The high position can allow the shuttle 10 to move along track 7 in the storage lane 4 while carrying the barrel 11 over the blocking elements 13. The clamping system 20 preferably including two pairs of clamps 21, each pair being mounted on one of the support bars 15, is configured to prevent said barrel 11 from rolling off the shuttle 10 when the shuttle moves along said first track 7. The shuttle 10 may further be configured to move on a track along a second direction 9 which is substantially transverse to a track 7 along the first direction 5, for example along a track extending in a main lane or transit lane 8. Thereto, the shuttle 10 may include an additional set of wheels which may be liftable between a use position and a lifted position. When the shuttle is moving along a storage lane, the further set of wheels may be in the lifted position. When the shuttle is configured to move along two substantially transverse direction, the shuttle may further comprise an additional clamping system (not shown) configured to clamp the rollable goods when the shuttle moves on a track along the second direction 9. Said additional clamping system may be configured to clamp the rollable goods, for example the barrel 11, simultaneously with the clamping system 20 or sequentially, instead of, the clamping system 20 depending on the direction of moving of the automated warehouse shuttle 10.

Figure 6 shows a schematic side view on the automated warehouse shuttle of Figure 5, the support surface 15 being in the high position. Figure 7 shows a detail of the schematic side view of Figure 6, in particular a side view of one of the support bars 15 on which a pair of clamps 21 is mounted, the clamping system 20 being in the clamping position. When the actuation system 16 moves the support bars 15 from a low position to a high position, the barrel 11 will engage the respective support arms 21b of the at least one pair of clamps 21. A weight of said barrel 11 will then push down said support arms 21b causing the clamps 21 to tilt around joint 22 and causing the respective clamping arms 21a to engage a side of the barrel 11. Moving the support surface 15 from the low position to the high position under the rollable goods thus causes the clamping system 20 to move from the resting position to the clamping position. The support arm 21b can preferably be shorter than the clamping arm 21a to improve the clamping force of the clamping system 20 exerted on the barrel 11. A free end of the clamping arm 21a, as well as a free end of the support arm 21b, may advantageously include a rotatable cylinder 25, configured to rotate along a curved lateral surface of the barrel 11 when engaging said barrel 11 in the clamping position of the clamping system 20. A size of the clamps 21, in particular a length of said clamping arm 21a, a length of said support arm 21b, or an angle between said clamping arm and said support arm, may be adjustable, such that various rollable goods with varying curvatures may be carried by said automated warehouse shuttle 10.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein. In other words, it is contemplated to cover any and all modifications, variations or equivalents that fall within the scope of the claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An automated warehouse shuttle (10) for automatically carrying rollable goods (11) on a track (6a) along at least one direction (5) in a warehouse (1), the shuttle (10) including a support surface (15) configured to support said rollable goods, wherein the support surface is movable between a low position in which the shuttle is configured to move under the rollable goods, and a high position in which the support surface is configured to support the rollable goods, the shuttle is **characterized in** further comprising a clamping system (20) including at least one pair of clamps (21), wherein the at least one pair of clamps (21) is movable between a resting position and a clamping position, wherein the support surface (15) and the clamping system (20) are configured such that moving the support surface (15) from the low position to the high position under the rollable goods causes the clamping system (20) to move from the resting position to the clamping position, wherein each clamp of the at least one pair of clamps includes a clamping arm (21a) configured to clamp the rollable goods in the clamping position and a support arm (21b) which is configured to support said rollable goods in the clamping position, the clamping arm and the support arm being fixedly attached to each other forming an obtuse angle, wherein each clamp of the at least one pair of clamps (21) is tiltably attached to the support surface (15) at the obtuse angle formed by the clamping arm (21a) and the support arm (21b).

2. The automated warehouse shuttle (10) according to claim 1, wherein the at least one pair of clamps (21) is tiltably attached to the support surface such that the at least one pair of clamps is tiltable between a resting position and a clamping position.

3. The automated warehouse shuttle (10) according to any of the preceding claims, wherein the at least one pair of clamps (21) is biased towards the resting position.

4. The automated warehouse shuttle (10) according to any of the preceding claims, wherein the at least one pair of clamps (21) substantially forms a W-shape in the resting position.

5. The automated warehouse shuttle (10) according to any of the preceding claims, wherein the support arm (21b) is shorter than the clamping arm (21a).

6. The automated warehouse shuttle (10) according to any of the preceding claims, wherein the shuttle is configured to move on a track (6b) along a second direction (9) which is substantially transverse to a track (6a) along the at least one direction (5).

7. The automated warehouse shuttle (10) according to claim 6, further comprising an additional clamping system configured to clamp the rollable goods when the shuttle moves on a track (6b) along the second direction (9).

## Patentansprüche

1. Automatisiertes Lagerfahrzeug (10) zum automatischen Transport von rollbaren Waren (11) auf einer Schiene (6a) entlang mindestens einer Richtung (5) in einem Lager (1), wobei das Fahrzeug (10) eine Stützfläche (15) beinhaltet, die dazu konfiguriert ist, die rollbaren Waren zu stützen, wobei die Stützfläche zwischen einer niedrigen Position, in der das Fahrzeug dazu konfiguriert ist, sich unter den rollbaren Waren zu bewegen, und einer hohen Position, in der die Stützfläche dazu konfiguriert ist, die rollbaren Waren zu stützen, bewegbar ist, wobei das Fahrzeug **dadurch gekennzeichnet ist, dass** es ferner ein Klemmsystem (20) umfasst, das mindestens ein Paar von Klemmen (21) beinhaltet, wobei das mindestens eine Paar von Klemmen (21) zwischen einer Ruheposition und einer Klemmposition bewegbar ist, wobei die Stützfläche (15) und das Klemmsystem (20) so konfiguriert sind, dass das Bewegen der Stützfläche (15) aus der niedrigen Position in die hohe Position unter den rollbaren Waren bewirkt, dass sich das Klemmsystem (20) aus der Ruheposition in die Klemmposition bewegt, wobei jede Klemme des mindestens einen Paars von Klemmen einen Klemmarm (21a), der dazu konfiguriert ist, die rollbaren Waren in der Klemmposition zu klemmen, und einen Stützarm (21b), der dazu konfiguriert ist, die rollbaren Waren in der Klemmposition zu stützen, beinhaltet, wobei der Klemmarm und der Stützarm fest aneinander angebracht sind und einen stumpfen Winkel bilden, wobei jede Klemme des mindestens einen Paars von Klemmen (21) kippbar an der Stützfläche (15) in dem stumpfen Winkel angebracht ist, der durch den Klemmarm (21a) und den Stützarm (21b) gebildet wird.

2. Automatisiertes Lagerfahrzeug (10) nach Anspruch 1, wobei das mindestens eine Paar von Klemmen (21) kippbar an der Stützfläche so angebracht ist, dass das mindestens eine Paar von Klemmen zwischen einer Ruheposition und einer Klemmposition kippbar ist.

3. Automatisiertes Lagerfahrzeug (10) nach einem der vorhergehenden Ansprüche, wobei das mindestens eine Paar von Klemmen (21) in Richtung der Ruheposition vorgespannt ist.

4. Automatisiertes Lagerfahrzeug (10) nach einem der vorhergehenden Ansprüche, wobei das mindestens eine Paar von Klemmen (21) in der Ruheposition im Wesentlichen eine W-Form bildet.

5. Automatisiertes Lagerfahrzeug (10) nach einem der vorhergehenden Ansprüche, wobei der Stützarm (21b) kürzer als der Klemmarm (21a) ist.

6. Automatisiertes Lagerfahrzeug (10) nach einem der vorhergehenden Ansprüche, wobei das Fahrzeug dazu konfiguriert ist, sich auf einer Schiene (6b) entlang einer zweiten Richtung (9) zu bewegen, die im Wesentlichen quer zu einer Schiene (6a) entlang der mindestens einen Richtung (5) ist.

7. Automatisiertes Lagerfahrzeug (10) nach Anspruch 6, ferner umfassend ein zusätzliches Klemmsystem, das dazu konfiguriert ist, die rollbaren Waren zu klemmen, wenn sich das Fahrzeug auf einer Schiene (6b) entlang der zweiten Richtung (9) bewegt.

## Revendications

1. Navette d'entrepôt automatisée (10) pour transporter automatiquement des marchandises roulantes (11) sur une voie de guidage (6a) selon au moins une direction (5) dans un entrepôt (1), la navette (10) comprenant une surface de support (15) conçue pour supporter lesdites marchandises roulantes, dans laquelle la surface de support peut être déplacée entre une position basse dans laquelle la navette est conçue pour se déplacer sous les marchandises roulantes, et une position haute dans laquelle la surface de support est conçue pour supporter les marchandises roulantes, la navette est **caractérisée en ce qu'**elle comprend en outre un système de serrage (20) comprenant au moins une paire de pinces (21), dans laquelle l'au moins une paire de pinces (21) peut être déplacée entre une position de repos et une position de serrage, dans laquelle la surface de support (15) et le système de serrage (20) sont conçus de sorte que le déplacement de la surface de support (15) de la position basse à la position haute sous les marchandises roulantes amène le système de serrage (20) à se déplacer de la position de repos à la position de serrage, dans laquelle chaque pince de l'au moins une paire de pinces comprend un bras de serrage (21a) conçu pour serrer les marchandises roulantes dans la position de serrage et un bras de support (21b) qui est conçu pour supporter lesdites marchandises roulantes dans la position de serrage, le bras de serrage et le bras de support étant attachés de manière fixe l'un à l'autre en formant un angle obtus, dans laquelle chaque pince de l'au moins une paire de pinces (21) est montée de manière inclinable sur la surface de support (15) selon l'angle obtus formé par le bras de serrage (21a) et le bras de support (21b).

2. Navette d'entrepôt automatisée (10) selon la revendication 1, dans laquelle l'au moins une paire de pinces (21) est montée de manière inclinable sur la surface de support de sorte que l'au moins une paire de pinces puisse être inclinée entre une position de repos et une position de serrage.

3. Navette d'entrepôt automatisée (10) selon l'une quelconque des revendications précédentes, dans laquelle l'au moins une paire de pinces (21) est sollicitée vers la position de repos.

4. Navette d'entrepôt automatisée (10) selon l'une quelconque des revendications précédentes, dans laquelle l'au moins une paire de pinces (21) forme sensiblement une forme de W dans la position de repos.

5. Navette d'entrepôt automatisée (10) selon l'une quelconque des revendications précédentes, dans laquelle le bras de support (21b) est plus court que le bras de serrage (21a).

6. Navette d'entrepôt automatisée (10) selon l'une quelconque des revendications précédentes, dans laquelle la navette est conçue pour se déplacer sur une voie de guidage (6b) selon une seconde direction (9) qui est sensiblement transversale à une voie de guidage (6a) selon l'au moins une direction (5).

7. Navette d'entrepôt automatisée (10) selon la revendication 6, comprenant en outre un système de serrage supplémentaire conçu pour serrer les marchandises roulantes lorsque la navette se déplace sur une voie de guidage (6b) selon la seconde direction (9).
